# DEMANDE DE BREVET EUROPEEN

(11) **EP 0 919 679 A1**
(43) Date de publication de la demande: **02.06.1999**
(21) Numéro de dépôt: 98402406.7
(22) Date de dépôt: 30.09.1998
(51) Int. Cl.: E05B 63/12, B60N 2/00

(54) **Verrou à encliquetage destiné notamment à la fixation d'un siège pour véhicule sur un plancher de ce véhicule**

(30) Priorité: 27.11.1997 FR 9714948
(71) Demandeur: CESA Compagnie Européenne de Sièges pour Automobiles, 92300 Levallois-Perret (FR)
(72) Inventeur: Blanchard, Jean-Marie, 45290 Nogent sur Vernisson (FR)
(74) Mandataire: de la Bigne, Guillaume Michel Marie

(57) **Abrégé**

Le verrou comprend un pêne (22) comportant un corps de verrouillage (24) et des moyens d'encliquetage de ce corps (24) dans une gâche (28) par serrage de cette gâche (28) entre une douille d'appui (54) et au moins une bille de verrouillage (56) escamotable. La douille d'appui (54) est montée coulissante autour du corps de verrouillage (24) en étant déplaçable, par coopération avec la gâche (28), à l'encontre d'une force élastique de rappel, depuis une position de libération du pêne (22), dans laquelle la douille (54) recouvre la bille de verrouillage (56) en la retenant en position escamotée, vers une position de verrouillage du pêne (22), dans laquelle la douille (54) et la bille de verrouillage (56) enserrent la gâche (28). Le pêne (22) comporte de plus des moyens de sécurité (80) interdisant un déplacement accidentel de la douille (54) depuis sa position de libération vers sa position de verrouillage du pêne, autrement que par coopération de cette douille (54) avec la gâche (28).

## Description

La présente invention concerne un verrou à encliquetage destiné notamment à la fixation d'un siège pour véhicule automobile sur un plancher de ce véhicule.

On connaît déjà dans l'état de la technique un verrou du type comprenant un pêne comportant un corps de verrouillage de forme générale cylindrique et des moyens d'encliquetage de ce corps dans une gâche par serrage de cette gâche entre une douille d'appui et au moins une bille de verrouillage escamotable portés par le corps de verrouillage, la douille d'appui étant montée coulissante axialement autour du corps de verrouillage en étant déplaçable, par coopération avec la gâche, à l'encontre d'une force élastique de rappel, depuis une position de libération du pêne, dans laquelle la douille recouvre la bille de verrouillage en la retenant en position escamotée, vers une position de verrouillage du pêne, dans laquelle la douille et la bille de verrouillage enserrent la gâche.

Un verrou de ce type est décrit par exemple dans FR-A-2 735 174 (FR-95 06 868) ou FR-A-2 735 810 (FR-95 07 605).

Ce type de verrou permet par exemple d'accrocher de façon amovible un siège sur le plancher de l'habitacle d'un véhicule automobile du type monocorps. Dans ce cas, le corps de verrouillage du pêne est relié à un piétement du siège et la gâche est solidaire du plancher.

Lorsque le siège est décroché pour être notamment retiré du véhicule, la douille du verrou peut être déplacée accidentellement à l'encontre de sa force élastique de rappel, par exemple par choc sur un objet saillant ou par l'action inopportune d'une personne. Ce déplacement accidentel a pour effet de libérer la bille de verrouillage en position saillante. Dans ce cas, la douille ne peut généralement plus regagner automatiquement sa position d'escamotage de la bille de verrouillage. Cette dernière risque par conséquent d'être endommagée et/ou d'empêcher ultérieurement l'accrochage correct du siège sur le plancher du véhicule.

L'invention a pour but d'empêcher le déplacement accidentel de la douille à l'encontre de sa force élastique de rappel lorsque le pêne du verrou est séparé de la gâche.

A cet effet, l'invention a pour objet un verrou du type précité, caractérisé en ce que le pêne comporte de plus des moyens de sécurité interdisant un déplacement accidentel de la douille, depuis sa position de libération vers sa position de verrouillage du pêne, autrement que par coopération de cette douille avec la gâche.

Suivant d'autres caractéristiques de l'invention :
- les moyens de sécurité comprennent au moins une bille de sécurité montée déplaçable sur le corps de verrouillage entre une position escamotée dans ce corps autorisant le coulissement de la douille d'appui le long du corps et une position saillante à la périphérie de ce corps bloquant la douille d'appui en position de recouvrement de la bille de verrouillage ;
- la bille de sécurité est logée à la fois, dans un perçage, qui la guide entre ses positions saillante et escamotée, et dans une lumière d'entraînement, le perçage de guidage étant ménagé dans le corps de verrouillage et la lumière d'entraînement étant ménagée dans un organe mobile d'entraînement porté par le pêne ;
- l'organe d'entraînement est monté coulissant sensiblement axialement sur le corps de verrouillage, la lumière d'entraînement comportant une première partie oblique coopérant par effet de rampe avec la bille de sécurité pour la déplacer entre ses positions saillante et escamotée et une seconde partie axiale de maintien de la bille de sécurité dans sa position escamotée ;
- l'organe d'entraînement est monté coulissant dans une rainure de guidage sensiblement axiale ménagée dans le corps de verrouillage et s'étend radialement entre ce corps et la douille d'appui ;
- l'organe d'entraînement est sollicité élastiquement de manière à rappeler la bille de sécurité en position saillante ;
- l'organe d'entraînement a une forme générale de barrette aplatie, la lumière d'entraînement étant ménagée à travers l'épaisseur de l'organe d'entraînement, la bille de sécurité ayant un diamètre supérieur à cette épaisseur de manière à permettre le contact de cette bille de sécurité avec la douille d'appui lorsque la bille de sécurité est dans sa position saillante ;
- la douille et l'organe d'entraînement comportent chacun une extrémité d'appui destinée à coopérer avec la gâche, l'extrémité d'appui de l'organe d'entraînement faisant saillie par rapport à l'extrémité d'appui de la douille lorsque cette douille est dans sa position de recouvrement de la bille de verrouillage, de manière à permettre, par coopération de la gâche successivement avec ces deux extrémités d'appui, tout d'abord, le déplacement de l'organe d'entraînement pour déplacer la bille de sécurité de sa position saillante vers sa position escamotée, et ensuite, le déplacement de la douille vers sa position de verrouillage du pêne dans la gâche.

L'invention a également pour objet un agencement d'un verrou tel que défini ci-dessus, caractérisé en ce que le pêne est relié à un siège de véhicule automobile et la gâche est solidaire d'un plancher de ce véhicule.

L'invention sera mieux comprise à l'aide de la description qui va suivre, donnée uniquement à titre d'exemple et faite en se référant aux dessins annexés, dans lesquels :
- la figure 1 est une vue de face d'un verrou selon l'invention;
- la figure 2 est une vue de dessus du verrou représenté à la figure 1;
- la figure 3 est une vue en coupe axiale, à échelle agrandie, du verrou représenté sur les figures précédentes, dans laquelle le pêne est séparé de la gâche;
- les figures 4 et 5 sont des vues similaires à la figure 3, représentant des étapes successives d'accrochage du pêne dans la gâche ;
- la figure 6 est une vue de détail du verrou selon la flèche 6 de la figure 3.

On a représenté sur les figures un verrou 10 selon l'invention agencé dans un support 12.

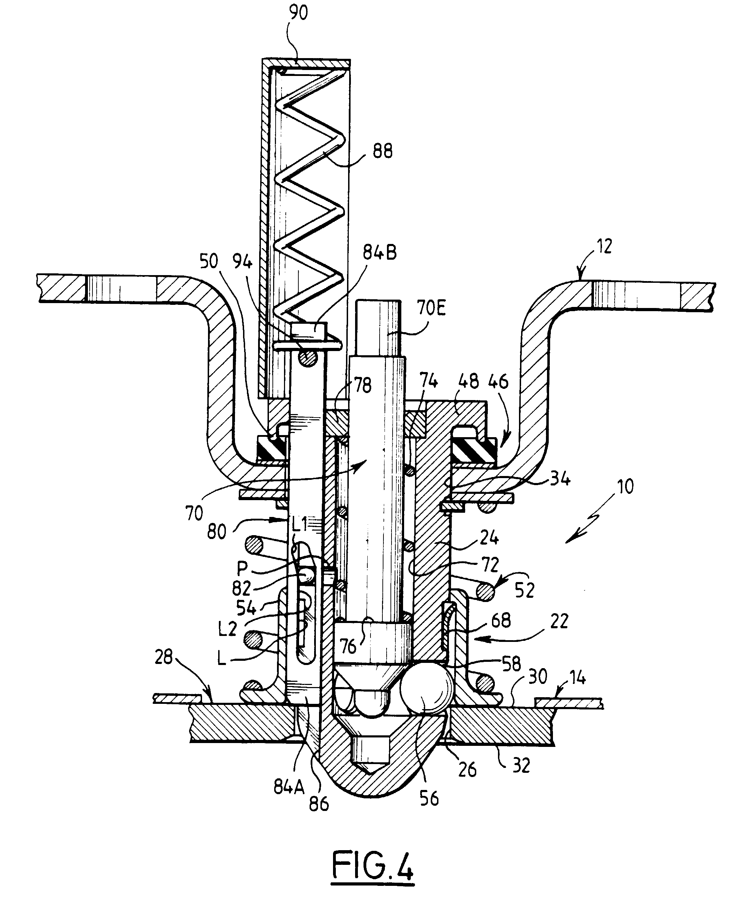

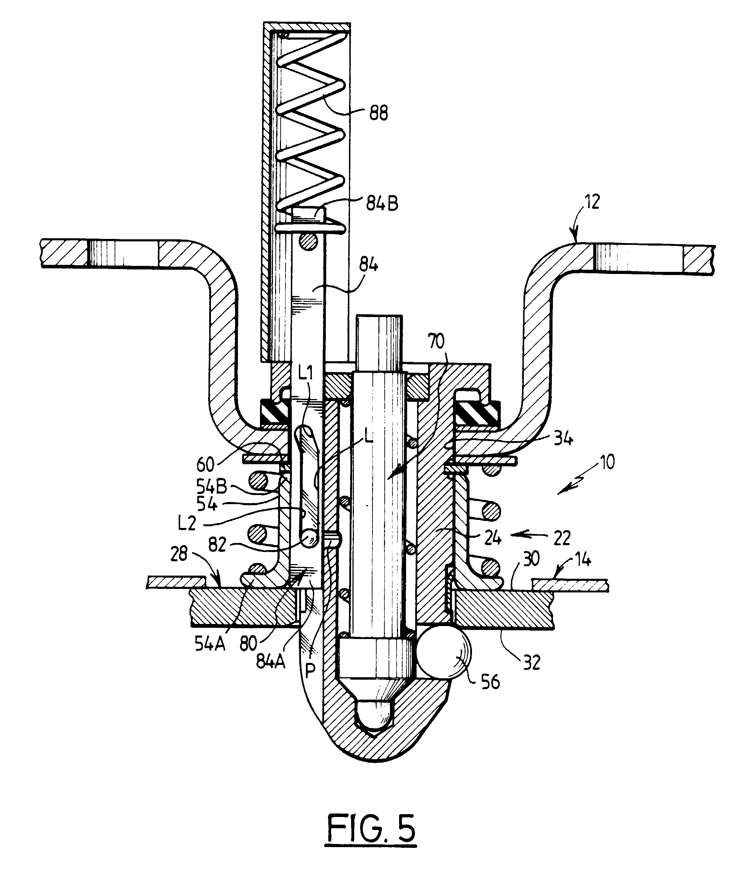

Le verrou 10 est destiné à fixer un siège amovible pour véhicule automobile sur un plancher 14 (représenté aux figures 4 et 5) de l'habitacle de ce véhicule.

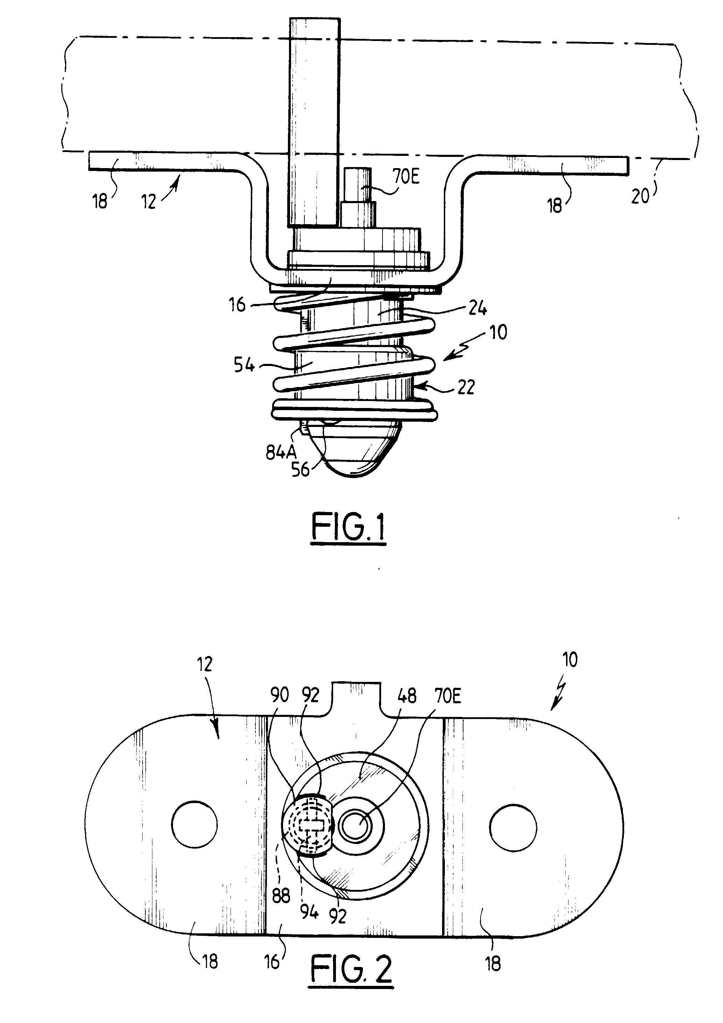

Le support 12, de forme générale en oméga, comporte une âme 16 reliant deux pattes 18 d'accrochage de ce support sur un élément 20 de piétement du siège représenté schématiquement sur la figure 1 en traits mixtes.

Le verrou 10 comprend un pêne 22 muni d'un corps de verrouillage 24 en forme générale de broche cylindrique, destiné à être verrouillé par encliquetage dans un orifice de verrouillage 26 ménagé dans une gâche 28 fixée de façon connue en soi sur le plancher 14 (voir figures 4 et 5).

L'orifice de verrouillage 26 s'étend entre deux faces opposées 30,32 de la gâche qui a une forme générale de plaque.

Le corps de verrouillage 24 s'étend à travers un perçage 34 du support 12. Ce perçage 34 est ménagé dans l'âme 16 entre deux faces opposées 36,38 de cette âme.

Le pêne 22 comporte des moyens élastiques 40 de pincement des faces opposées 36,38 de l'âme 16 destinés à immobiliser le corps 24 dans le perçage 34.

De préférence, les moyens de pincement 40 comprennent des première 42 et seconde 44 plaques de serrage coopérant avec les deux faces opposées 36,38 de l'âme 16 respectivement, traversées par le corps de verrouillage 24, et des premier et second organes élastiques de compression sollicitant respectivement les première 42 et seconde 44 plaques de serrage l'une vers l'autre.

Le premier organe de compression est une plaque 46 en matériau élastique, par exemple en élastomère, déformable suivant son épaisseur, traversée par le corps de verrouillage 24 et interposée entre la première plaque de serrage 42 et une tête d'appui 48 du corps 24 formant une extrémité de ce dernier.

De préférence, les plaques de serrage 42,44 et la plaque élastique 46 ont des formes générales en rondelles.

La tête d'appui 48 comporte avantageusement une saillie axiale annulaire 50 destinée à s'enfoncer partiellement dans la plaque de compression 46 par déformation élastique de celle-ci.

Le second organe de compression est un ressort 52 dont l'agencement sur le corps de verrouillage 24 sera décrit plus en détail par la suite.

Le pêne 22 est muni de moyens d'encliquetage libérables comprenant une douille d'appui axial 54 destinée à coopérer avec une première face 30 de la gâche, dite face d'appui, et des billes de verrouillage 56, montées escamotables sur le corps 24, destinées à coopérer avec la seconde face 32 de la gâche, dite face de verrouillage.

Dans l'exemple décrit, le pêne 22 comporte trois billes de verrouillage 56 logées, de façon connue en soi, dans des canaux radiaux 58 espacés angulairement, ménagés dans le corps de verrouillage 24. En variante, le pêne 22 peut comporter un plus petit ou un plus grand nombre de billes 56.

Le ressort de compression 52 entoure le corps de verrouillage 24 et est interposé entre la seconde plaque de serrage 44 et une première extrémité 54A de la douille destinée à venir en appui contre la face d'appui 30 de la gâche.

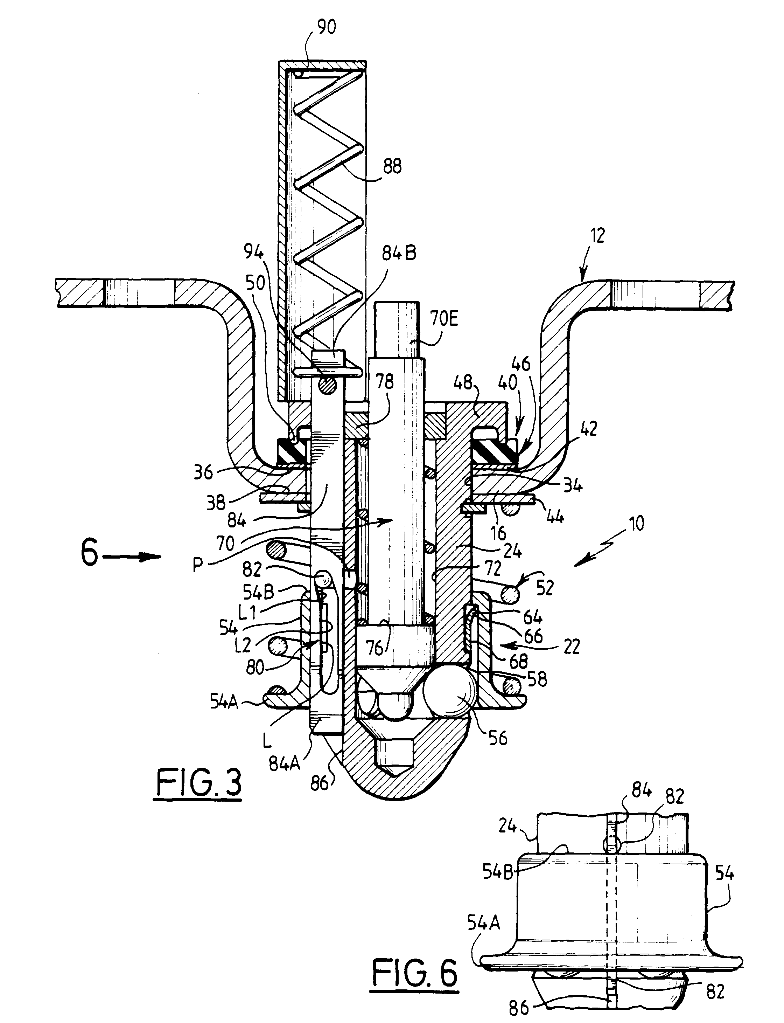

La douille 54 est déplaçable, par coopération avec la gâche 28 et à l'encontre de la force de rappel élastique du ressort 52, depuis une position de libération du pêne 22, telle que représentée sur les figures 1 et 3, vers une position de verrouillage de ce pêne 22 dans la gâche 28, telle que représentée sur la figure 5.

Dans sa position de libération du pêne 22, la douille 54 recouvre les billes de verrouillage 56 en les retenant en position escamotée. Dans sa position de verrouillage du pêne 22, la douille 54 et les billes de verrouillage 56 enserrent la gâche 28.

Le pêne 22 comprend en outre des premiers et seconds moyens de limitation de la course de la douille 54 définissant ses positions, respectivement, de libération et de verrouillage du pêne.

Les premiers moyens de limitation de la course de la douille 54 comprennent, de préférence, une seconde extrémité 54B de cette douille coopérant avec un jonc élastique (circlip) de blocage 60 interposé entre cette seconde extrémité 54B et la seconde plaque de serrage 44.

Les seconds moyens de limitation de la course de la douille 54 comprennent, de préférence, des butées axiales complémentaires 64,66 ménagées sur des surfaces en regard d'une bague anti-matage 68, portée par le corps de verrouillage 24, et de la douille 54. La bague anti-matage 68 est du type décrit dans FR-A-2 735 174 (FR-95 06 868).

Le pêne 22 est également muni de moyens de déplacement des billes de verrouillage 56 comprenant une aiguille 70 montée coulissante dans un alésage axial 72 du corps de verrouillage 24. Cet alésage 72 communique avec les canaux radiaux 58.

L'aiguille 70 de déplacement des billes est d'un type classique, par exemple décrit dans FR-A-2 735 810 (FR-95 07 605).

On notera que l'aiguille 70 est sollicitée élastiquement vers une position de maintien des billes de verrouillage 56 dans leur position saillante, telle que représentée sur la figure 5, par un ressort de compression 74 interposé entre un épaulement 76 de l'aiguille et un palier 78 de guidage axial de cette aiguille fixé à une extrémité ouverte de l'alésage axial 72.

L'aiguille 70 s'étend partiellement à travers le palier 78, à l'extérieur de l'alésage 72. L'extrémité externe 70E de l'aiguille est destinée à être reliée à des moyens classiques de manoeuvre non représentés.

Le pêne 22 comporte de plus des moyens de sécurité 80 interdisant un déplacement accidentel de la douille 54 depuis sa position de libération vers sa position de verrouillage de ce pêne, autrement que par coopération de cette douille 54 avec la gâche 28.

De préférence, les moyens de sécurité 80 comprennent au moins une bille de sécurité 82 montée déplaçable sur le corps de verrouillage 24 entre une position escamotée dans ce corps 24 autorisant le coulissement de la douille d'appui 54 le long du corps 24 (voir figure 5) et une position saillante à la périphérie de ce corps 24 bloquant la douille d'appui 54 en position de recouvrement des billes de verrouillage 56 (voir figure 3).

La bille de sécurité 82 est logée à la fois dans un perçage P, qui la guide entre ses positions saillante et escamotée et, dans une lumière d'entraînement L.

Le perçage de guidage P, de préférence sensiblement radial, est ménagé dans le corps de verrouillage 24. Ce perçage P ne débouche pas nécessairement dans l'alésage 70.

La lumière d'entraînement L est ménagée dans un organe mobile d'entraînement 84 porté par le pêne 22.

Cet organe d'entraînement 84, ayant de préférence une forme générale de barrette aplatie de section transversale rectangulaire, est monté coulissant dans une rainure de guidage 86 sensiblement axiale ménagée dans le corps de verrouillage 24.

L'organe d'entraînement 84 s'étend axialement à travers la tête 48 de l'organe de verrouillage, la plaque élastique 46, l'âme 16 du support, les plaques de serrage 42,44 et la douille d'appui 54. Ces différents éléments traversés par l'organe d'entraînement 84 comportent une échancrure ou rainure de dégagement pour le passage de cet organe 84.

On notera que l'organe d'entraînement 84 s'étend radialement entre le corps de verrouillage 24 et la douille d'appui 54.

La lumière d'entraînement L comporte une première partie oblique L1 coopérant par effet de rampe avec la bille de sécurité 82 pour la déplacer entre ses positions saillante et escamotée, et une seconde partie axiale L2 de maintien de la bille de sécurité 82 en position escamotée.

On notera que la lumière d'entraînement L est ménagée à travers l'épaisseur de l'organe d'entraînement 84, la bille de sécurité 82 ayant un diamètre supérieur à cette épaisseur (voir figure 6). La bille de sécurité 82 a un diamètre supérieur à cette épaisseur, de manière à permettre le contact de la seconde extrémité 54B de la douille avec cette bille de sécurité 82 lorsque cette dernière est dans sa position saillante représentée sur les figures 3 et 6.

L'organe d'entraînement 84 comporte une première extrémité, dite extrémité d'appui 84A, destinée à coopérer avec la gâche 28 (voir figures 4 et 5), et une seconde extrémité 84B sollicitée par un ressort de rappel 88 porté par le pêne 22.

Le ressort 88 est logé par exemple dans un boîtier cylindrique 90 d'axe parallèle à celui de l'aiguille 70. Ce boîtier 90 comporte une première extrémité fixée sur la tête 48 du corps de verrouillage, par exemple par des soudures 92, comme cela est représenté sur la figure 2.

Le ressort de rappel 88 est agencé entre un premier siège formé par la seconde extrémité du boîtier 90 et un second siège formé par une broche transversale 94 portée par la seconde extrémité 84B de l'organe d'entraînement.

Le ressort 88 sollicite élastiquement l'organe d'entraînement 84, de manière à rappeler la bille de sécurité 82 dans sa position saillante représentée sur la figure 3.

La plupart des caractéristiques de fonctionnement du verrou 10 sont connues et décrites par exemple dans FR-A-2 735 174 (FR-95 06 868) et FR-A-2 735 810 (FR-95 07 605). On ne décrira donc ci-dessous que le fonctionnement des moyens de sécurité 80.

Lorsque le pêne 22 est déverrouillé (séparé de la gâche 28), comme cela est représenté sur la figure 3, la bille de sécurité 82 est en position saillante et coopère avec la seconde extrémité 54B de la douille d'appui de manière à bloquer cette douille en position de recouvrement des billes de verrouillage 56.

On notera que l'extrémité d'appui 84A de l'organe d'entraînement, d'une part, fait saillie axialement par rapport à l'extrémité d'appui 54A de la douille, et d'autre part, est délimitée par une surface d'appui très réduite par rapport à celle de l'extrémité d'appui 54A de la douille.

L'extrémité d'appui 84A de l'organe d'entraînement présente une prise réduite qui empêche efficacement toute sollicitation accidentelle de cet organe d'entraînement 84 à l'encontre du ressort de rappel 88. La raideur de ce ressort 88 est choisie de préférence de manière à empêcher le déplacement de l'organe d'entraînement 84 à l'encontre de sa force de rappel par pression manuelle sur son extrémité d'appui 84A.

Lors de la mise en place du pêne 22 dans l'orifice de verrouillage 26, du fait du décalage axial des extrémités d'appui de l'organe d'entraînement 84 et de la douille 54, la gâche 28 coopère successivement avec ces deux extrémités d'appui 84A, 54A.

Ainsi, la gâche 28 déplace tout d'abord l'organe d'entraînement 84 qui, par l'intermédiaire de la partie oblique L1 de la lumière L déplace la bille de sécurité 82 de sa position saillante vers sa position escamotée, comme cela est représenté sur la figure 4. La douille 54 peut alors coulisser le long du corps de verrouillage 24. La gâche 28 déplace ensuite la douille 54 vers sa position de verrouillage du pêne 22, comme cela est représenté sur la figure 5. La bille de sécurité 82 est maintenue dans sa position escamotée par la partie axiale L2 de la lumière L.

Inversement, lorsque l'on déverrouille le pêne 22 pour le séparer de la gâche 28, le ressort 88 sollicite élastiquement l'organe d'entraînement 84 qui, par effet de rampe de la partie oblique L1 de la lumière L ramène la bille de sécurité 82 en position saillante de blocage de la douille 54 en position de recouvrement des billes de verrouillage 56.

Parmi les avantages de l'invention on notera que celle-ci permet d'empêcher le déplacement accidentel de la douille d'appui à l'encontre de sa force élastique de rappel lorsque le pêne est séparé de la gâche, ceci avec des moyens simples et peu coûteux.

## Revendications

1. Verrou du type comprenant un pêne (22) comportant un corps de verrouillage (24) de forme générale cylindrique et des moyens d'encliquetage de ce corps (24) dans une gâche (28) par serrage de cette gâche entre une douille d'appui (54) et au moins une bille de verrouillage (56) escamotable portés par le corps de verrouillage (24), la douille d'appui (54) étant montée coulissante axialement autour du corps de verrouillage (24) en étant déplaçable, par coopération avec la gâche (28), à l'encontre d'une force élastique de rappel, depuis une position de libération du pêne (22), dans laquelle la douille (54) recouvre la bille de verrouillage (56) en la retenant en position escamotée, vers une position de verrouillage du pêne (22), dans laquelle la douille (54) et la bille de verrouillage (56) enserrent la gâche (28), **caractérisé en ce que** le pêne (22) comporte de plus des moyens de sécurité (80) interdisant un déplacement accidentel de la douille (54), depuis sa position de libération vers sa position de verrouillage du pêne (22), autrement que par coopération de cette douille (54) avec la gâche (28).

2. Verrou selon la revendication 1, caractérisé en ce que les moyens de sécurité (80) comprennent au moins une bille de sécurité (82) montée déplaçable sur le corps de verrouillage (24) entre une position escamotée dans ce corps (24) autorisant le coulissement de la douille d'appui (54) le long du corps (24) et une position saillante à la périphérie de ce corps (24) bloquant la douille d'appui (54) en position de recouvrement de la bille de verrouillage (56).

3. Verrou selon la revendication 2, caractérisé en ce que la bille de sécurité (82) est logée à la fois, dans un perçage (P), qui la guide entre ses positions saillante et escamotée, et dans une lumière d'entraînement (L), le perçage de guidage (P) étant ménagé dans le corps de verrouillage (24) et la lumière d'entraînement (L) étant ménagée dans un organe mobile d'entraînement (84) porté par le pêne (22).

4. Verrou selon la revendication 3, caractérisé en ce que l'organe d'entraînement (84) est monté coulissant sensiblement axialement sur le corps de verrouillage (24), la lumière d'entraînement (L) comportant une première partie oblique (L1) coopérant par effet de rampe avec la bille de sécurité (82) pour la déplacer entre ses positions saillante et escamotée et une seconde partie axiale (L2) de maintien de la bille de sécurité (82) dans sa position escamotée.

5. Verrou selon la revendication 4, caractérisé en ce que l'organe d'entraînement (84) est monté coulissant dans une rainure de guidage (86) sensiblement axiale ménagée dans le corps de verrouillage (24) et s'étend radialement entre ce corps (24) et la douille d'appui (54).

6. Verrou selon l'une quelconque des revendications 3 à 5, caractérisé en ce que l'organe d'entraînement (84) est sollicité élastiquement de manière à rappeler la bille de sécurité (82) en position saillante.

7. Verrou selon l'une quelconque des revendications 3 à 6, caractérisé en ce que l'organe d'entraînement (84) a une forme générale de barrette aplatie, la lumière d'entraînement (L) étant ménagée à travers l'épaisseur de l'organe d'entraînement (84), la bille de sécurité (82) ayant un diamètre supérieur à cette épaisseur de manière à permettre le contact de cette bille de sécurité (82) avec la douille d'appui (54) lorsque la bille de sécurité (82) est dans sa position saillante.

8. Verrou selon l'une quelconque des revendications 3 à 7, caractérisé en ce que la douille (54) et l'organe d'entraînement (82) comportent chacun une extrémité d'appui (54A,84A) destinée à coopérer avec la gâche (28), l'extrémité d'appui (84A) de l'organe d'entraînement faisant saillie par rapport à l'extrémité d'appui (54A) de la douille lorsque cette douille (54) est dans sa position de recouvrement de la bille de verrouillage (56), de manière à permettre, par coopération de la gâche (28) successivement avec ces deux extrémités d'appui (54A,84A), tout d'abord, le déplacement de l'organe d'entraînement (84) pour déplacer la bille de sécurité (82) de sa position saillante vers sa position escamotée, et ensuite, le déplacement de la douille (54) vers sa position de verrouillage du pêne (22) dans la gâche (28).

9. Agencement d'un verrou selon l'une quelconque des revendications précédentes, caractérisé en ce que le pêne (22) est relié à un siège de véhicule automobile et la gâche (28) est solidaire d'un plancher (14) de ce véhicule.
